# EUROPÄISCHE PATENTSCHRIFT

(11) **EP 1 164 273 B1**
(45) Veröffentlichungstag und Bekanntmachung des Hinweises auf die Patenterteilung: **19.03.2008**
(21) Anmeldenummer: 01113904.5
(22) Anmeldetag: 07.06.2001
(51) Int. Cl.: F02C 7/08, F02K 3/00

(54) **Turboluftstrahltriebwerk mit Wärmetauscher**
Turbo jet engine with heat exchanger
Turboréacteur avec échangeur de chaleur

(30) Priorität: 13.06.2000 DE 10029060
(43) Veröffentlichungstag der Anmeldung: 19.12.2001
(73) Patentinhaber: Rolls-Royce Deutschland Ltd & Co KG, 15827 Dahlewitz (DE)
(72) Erfinder: Boeck, Alexander, 82288 Kottgeisering (DE)
(74) Vertreter: Weber, Joachim

(56) Entgegenhaltungen:
- CH-A- 274 060
- DE-C- 854 605
- FR-A- 943 198
- FR-A- 1 242 634
- GB-A- 529 786
- GB-A- 576 094
- GB-A- 827 542
- US-A- 3 621 654

## Beschreibung

Die Erfindung bezieht sich auf ein Turboluftstrahltriebwerk für ein Luftfahrzeug, welches mit einem Wärmetauscher versehen ist.

Im Einzelnen bezieht sich die Erfindung auf ein Turboluftstrahltriebwerk nach dem Oberbegriff des Anspruchs 1.

Aus dem Stand der Technik sind unterschiedlichste Ausgestaltungsformen von Turboluftstrahltriebwerken vorbekannt. Dabei ist es Ziel der technischen Entwicklung, den Wirkungsgrad zu verbessern und damit unter anderem einen niedrigeren Brennstoffverbrauch zu erzielen. Die Entwicklungen gehen auf eine kontinuierliche Verbesserung des Wirkungsgrades der einzelnen Komponenten. Diese Optimierungsmaßnahmen sind jedoch insbesondere hinsichtlich des Kosten-Nutzen-Verhältnisses nicht beliebig steigerbar.

Die den nächstkommenden Stand der Technik bildende DE 854 605 C zeigt eine Fluggasturbine, welche eine Rückführung der aus der Niederdruckturbine austretenden Abgase in einen Wärmetauscher (Luftvorwärmer) vorsieht, bevor diese Gase in die Umgebung abgeführt werden. Der Wärmetauscher dient dazu, die aus dem Hochdruckverdichter austretende Luft zu erwärmen, bevor diese der Brennkammer zugeführt wird.

Aus der GB 827 542 A ist eine stationäre Gasturbine vorbekannt, bei welcher ein Wärmetauscher verwendet wird, durch welchen die Abgase der Turbine genutzt werden, um verdichtete Luft von dem Kompressor zu erwärmen. Die Abgase werden nachfolgend einer weiteren Turbine zugeführt.

Der Erfindung liegt die Aufgabe zugrunde, ein Turboluftstrahltriebwerk der eingangs genannten Art zu schaffen, welches bei einfachem Aufbau und betriebssicherer Wirkungsweise einen gesteigerten Wirkungsgrad und einen geringen spezifischen Brennstoffverbrauch hat.

Erfindungsgemäß wird die Aufgabe durch die Merkmale des Hauptanspruchs gelöst, die Unteransprüche zeigen weitere vorteilhafte Ausgestaltungen der Erfindung.

Bei dem erfindungsgemäßen Luftstrahltriebwerk ist somit vorgesehen, dass zwischen dem Verdichter und der Brennkammer ein Wärmetauscher angeordnet ist, dass zumindest eine Heißgasleitung von einem Bereich nach der Hochdruckturbine abzweigt und mit dem Wärmetauscher verbunden ist und dass zumindest eine Kaltgasleitung den Wärmetauscher mit einem Bereich vor der Niederdruckturbine verbindet.

Das erfindungsgemäße Turboluftstrahltriebwerk zeichnet sich durch eine Reihe erheblicher Vorteile aus.

Durch die Verwendung eines Wärmetauschers ist es möglich, die verdichteten, der Brennkammer zuzuführenden Gase zusätzlich zu erwärmen. Dieser zusätzliche Energieertrag bedingt, dass entsprechend weniger Energie durch Brennstoff im Bereich der Brennkammer zugeführt werden muss. Daraus ergibt sich eine deutliche Verringerung des Brennstoffverbrauchs bei gleich bleibender Leistung des Turboluftstrahltriebwerks. Durch die Entnahme der Heißgase aus einem Bereich nach der Hochdruckturbine ist sichergestellt, dass die Heißgase ausreichend heiß sind und eine ausreichende Wärmemenge dem Wärmetauscher zuführen können.

Insgesamt ist es möglich, den spezifischen Brennstoffverbrauch (Specific Fuel Consumption SFC) zwischen 2% und 4% zu erniedrigen. Diese Verringerung des spezifischen Brennstoffverbrauchs ist unabhängig von sonstigen Optimierungsmaßnahmen des Turboluftstrahltriebwerks.

In einer besonders günstigen Weiterbildung der Erfindung ist vorgesehen, dass der Wärmetauscher zur Durchführung der gesamten aus dem Verdichter ausströmenden Luftmenge ausgebildet ist. Somit ist sichergestellt, dass die gesamte verdichtete Luft beziehungsweise die gesamten verdichteten Gase bei der Durchströmung des Wärmetauschers entsprechend erwärmt werden.

Der Wärmetauscher ist erfindungsgemäß bevorzugt in Gegenstrombauweise aufgebaut. Dies führt zu einer günstigen und betriebssicheren Arbeitsweise. Weiterhin ist es vorteilhaft, wenn der Wärmetauscher auf der Seite der Verdichterluft als Diffusor ausgebildet ist, sodass ein Teil des Druckverlustes in dem Wärmetauscher durch die Wärmeübertragung kompensiert wird. Dieser Effekt wird, wie oben beschrieben, dadurch verstärkt, dass die aus dem Verdichter austretenden Gase zwangsgeführt durch den Wärmetauscher geleitet werden.

Bei der Erfindung ist weiterhin vorgesehen, dass das Heißgas über Öffnungen in den vorderen Kantenbereichen einer ersten Leitschaufelreihe nach der Hochdruckturbine abgeführt und über zugeordnete Leitungen in die Heißgasleitung eingeleitet wird. Nach dem Einströmen in die Leitschaufeln wird das Heißgas verzögert und radial nach außen in einen ersten Innenraum (Ringkammer) geleitet. An diesem Ringraum sind in günstiger Weiterbildung der Erfindung die Heißgasleitungen angeflanscht, die das Heißgas zum Wärmetauscher leiten. Es versteht sich, dass in der praktischen Realisierung der Erfindung sowohl mehrere Heißgasleitungen als auch mehrere Kaltgasleitungen vorgesehen sein können. Der erste Ringraum dient somit zur Zusammenführung der einzelnen Heißgasströme aus den Leitschaufeln.

Um das Gehäuse des ersten Ringraumes gegen zu hohe Temperaturen zu schützen, sind an dessen Innenseite Hitzeschilder angebracht.

Zur Rückführung der im Bereich des Wärmetauschers abgeführten Gase (Kaltgase) ist bevorzugterweise ein zweiter Ringraum vorgesehen, in welchen die Kaltgasleitung mündet. Dieser zweite Ringraum (Ringkanal) dient dazu, eine gleichmäßige umfangsmäßige Verteilung des rückgeführten Kaltgases zu ermöglichen. Um das Gehäuse des zweiten Ringraumes vor Überhitzung zu schützen, sind ebenfalls Hitzeschilder vorgesehen.

Von dem zweiten Ringraum aus strömt das Kaltgas in zu dem zweiten Ringraum offene Leitschaufeln der Niederdruckturbine. Vom Innenraum der Leitschaufeln strömt nachfolgend das Kaltgas durch Öffnungen an den Hinterkanten der Leitschaufeln aus. Beim Durchströmen der Leitschaufeln findet ein weiterer Wärmeübergang zwischen dem Arbeitsgas und dem Kaltgas durch die Wandungen der Leitschaft-Profile statt. Hierdurch gleichen sich die Temperaturen etwas an, wodurch sich ein gleichmäßigeres Strömungsprofil in der Niederdruckturbine ergibt. Die Austrittsschlitze oder Austrittsöffnungen an den Hinterkanten der Leitschaufeln sind in günstiger Ausgestaltung als Düsen ausgebildet.

Um eine strömungstechnisch und wärmemäßig optimale Durchströmung des Wärmetauschers zu gewährleisten, kann es günstig sein, wenn das Heißgas über lokale Heißgaskammern aus den Heißgasleitungen in den Wärmetauscher eingeleitet wird. Mit den Heißgaskammern ist bevorzugterweise ein Heißgasringraum verbunden, von welchem aus das Heißgas in axial und radial angeordneten Platten eingeleitet wird. In diesen Platten strömt das Heißgas in Gegenstromrichtung nach vorne, wobei es Wärme an die in entgegengesetzte Richtung vorbeiströmende Verdichterluft abgibt. Im vorderen Teil des Wärmetauschers wird das nun abgekühlte Heißgas (welches in dieser Anmeldung entsprechend dann als Kaltgas bezeichnet wird) in einem Kaltgasringraum gesammelt und von dort über lokale Kaltgaskammern den Kaltgasleitungen zugeleitet. Die lokalen Heißgaskammern beziehungsweise lokalen Kaltgaskammern dienen zur Einleitung der jeweiligen Gasmenge in die einzelnen Heißgasleitungen beziehungsweise Kaltgasleitungen.

Erfindungsgemäß ist somit vorgesehen, dass das dem Wärmetauscher zuzuführende Heißgas nach der Hochdruckturbine entnommen wird und dass das durch den Wärmetauscher geströmte, abgekühlte Kaltgas vor der Niederdruckturbine dem Arbeitsgas zuge-mischt wird. Hierdurch ergibt sich zum einen ein sehr günstiger, Platz sparender Aufbau des Turboluftstrahltriebwerkes und zum anderen ein geringes Gesamtgewicht der Anordnung. All dies führt insgesamt zu einer Senkung des spezifischen Kunststoffverbrauchs.

Im Folgenden wird die Erfindung anhand eines Ausführungsbeispiels in Verbindung mit der Zeichnung beschrieben. Dabei zeigt:
- Fig. 1: eine schematische Teil-Schnittansicht eines erfindungsgemäßen Turboluftstrahltriebwerks,
- Fig. 2: eine vergrößerte Teil-Ansicht des Auslaufbereichs des Heißgases und des Rücklaufbereichs des Kaltgases,
- Fig. 3: eine schematische Teil-Schnittansicht des erfindungsgemäßen Wärmetauschers mit Heißgasdurchströmung
- Fig. 4: eine Ansicht, analog Fig. 3, unter Darstellung der Kaltgasführung,
- Fig. 5: eine Teil-Schnittansicht durch eine Leitschaufel 3 zur Ableitung des Heißgases, und
- Fig. 6: eine Teil-Schnittansicht einer Leitschaufelreihe zur Rückführung des Kaltgases.

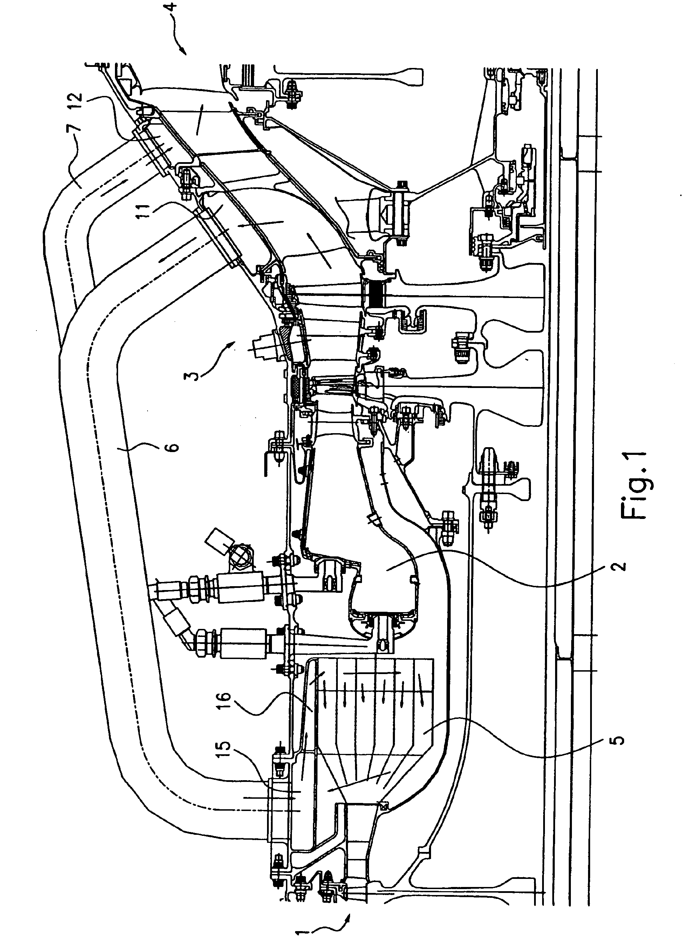

Die Fig. 1 zeigt in vereinfachter Teil-Schnittansicht einen Teilbereich eines bevorzugten Ausführungsbeispiels des erfindungsgemäßen Turboluftstrahltriebwerks. Dabei ist mit dem Bezugszeichen 1 ein Verdichter bezeichnet, von dem nur ein Teilbereich dargestellt ist. Das Bezugszeichen 2 zeigt eine Brennkammer, mit dem Bezugszeichen 3 ist eine Hochdruckturbine dargestellt, das Bezugszeichen 4 zeigt einen Teilbereich einer Niederdruckturbine.

Zwischen dem Verdichter 1 und der Brennkammer 2 ist ein Wärmetauscher 5 dargestellt. In Abhängigkeit von der konstruktiven Ausführung der Brennkammer oder der mehreren Brennkammern versteht es sich, dass erfindungsgemäß auch die Anordnung und Ausgestaltung des Wärmetauschers variiert werden kann. So ist es bei einzelnen Brennkammern möglich, mehrere, einzelne Wärmetauscher vorzusehen, während bei einer ringförmigen Brennkammer ein ringförmiger Wärmetauscher zur Anwendung kommen kann.

Weiterhin ist in Fig. 1 eine Heißgasleitung 6 dargestellt, durch welche, wie durch die Pfeile dargestellt, Heißgas aus einem Bereich hinter der Hochdruckturbine entnommen, einem ersten Ringraum 11 zugeführt, durch die Heißgasleitung 6 nach vorne transportiert, in eine Heißgaskammer 15 eingeleitet und einem Heißgasringraum 16 zugeführt werden kann, durch welchen das Heißgas in den Wärmetauscher 5 strömt. Dieser ist als Gegenstrom-Wärmetauscher ausgebildet und als Diffusor ausgestaltet.

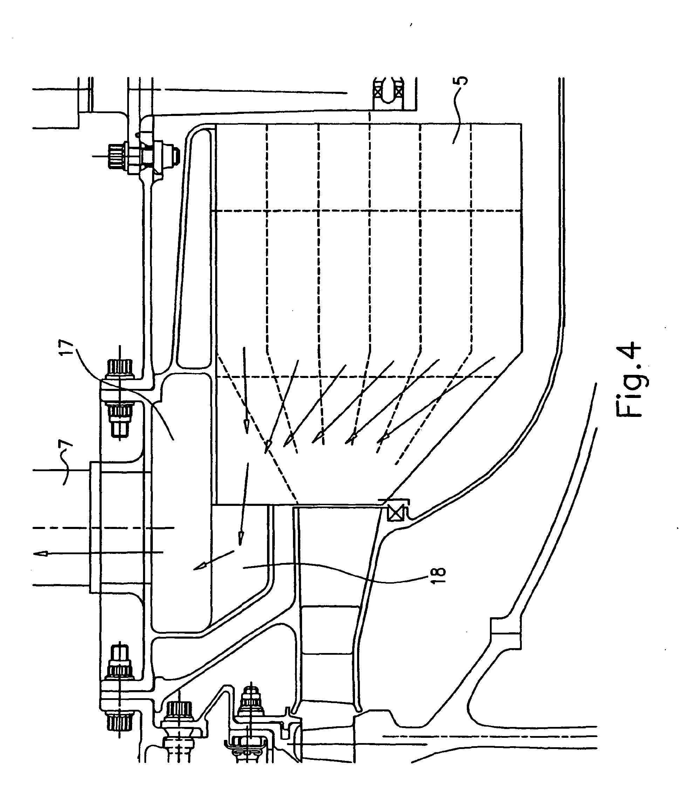

Die Rückführung der abgekühlten Gase (Kaltgas) erfolgt mittels einer Kaltgasleitung 7, die, wie in Fig. 4 gezeigt, mit einer Kaltgaskammer 17 in Verbindung steht. Für jede Kaltgasleitung 7 ist eine Kaltgaskammer 17 vorgesehen, analog ist jeder Heißgasleitung eine Heißgaskammer 15 zugeordnet.

In Strömungsrichtung vor der Kaltgaskammer 17 ist ein Kaltgasringraum 18 angeordnet, in welchem die abgekühlten Gase aus dem Wärmetauscher 5 gesammelt werden.

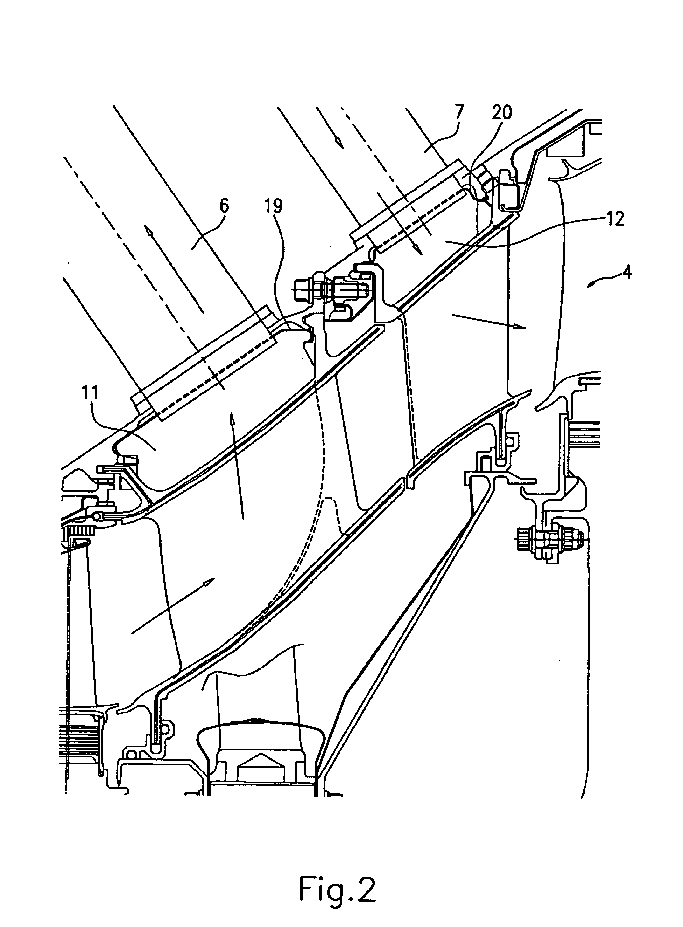

Die Rückführung durch die Kaltgasleitung 7 führt zu einer Einleitung der Kaltgase in einen zweiten Ringraum 12 (siehe Fig. 1 und 2)

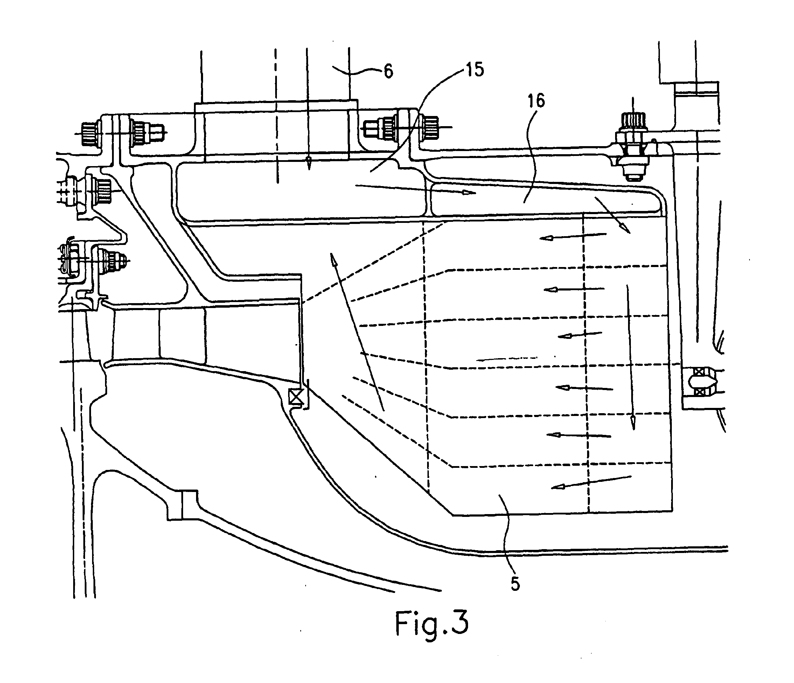

Die Fig. 3 und 4 verdeutlichen jeweils die Heißgasströme (Fig. 3) sowie die Kaltgasströme (Fig. 4).

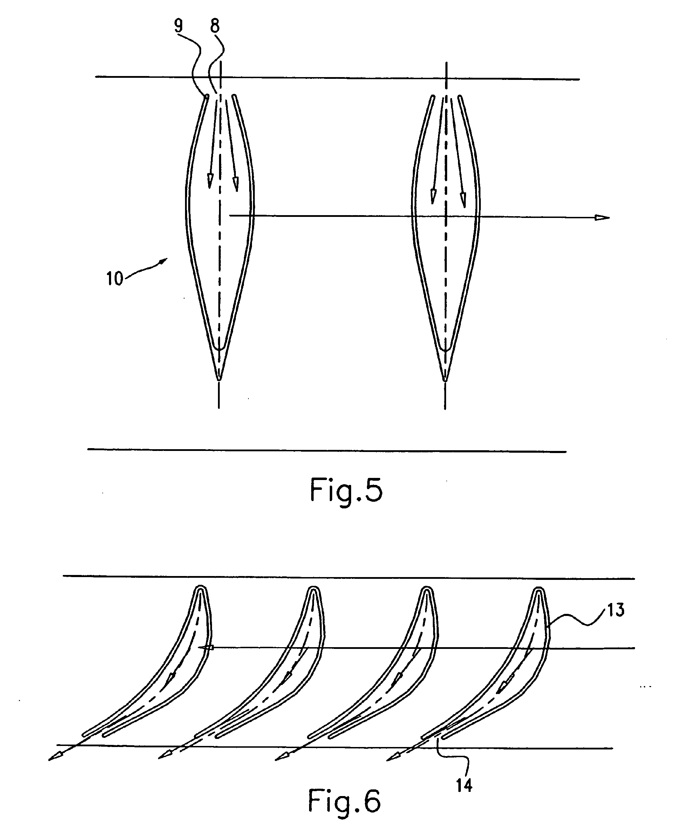

In Fig. 5 ist eine erste Leitschaufelreihe 10 der Niederdruckturbine 4 in vereinfachter, schematischer Teil-Schnittansicht dargestellt. Die einzelnen Leitschaufeln sind hohl ausgebildet und weisen jeweils eine oder mehrere Öffnungen 8 an einem vorderen Bereich 9 auf. Wie schematisch in Fig. 5 gezeigt, erfolgt die Einleitung der Heißgase in den ersten Ringraum 11 mit geeigneten Leitungen oder Kammern.

Die Fig. 6 zeigt in vereinfachter, schematischer Schnittansicht einige Leitschaufeln 13 im Einlaufbereich der Niederdruckturbine 4. Die Leitschaufeln 13 sind ebenfalls hohl ausgebildet, sodass Kaltluft aus dem zweiten Ringraum 12 in die Leitschaufeln 13 eingeleitet werden kann. Wie durch die Pfeile dargestellt, wird die Kaltluft durch rückseitige Öffnungen oder Schlitze 14, die düsenartig ausgebildet sein können, geleitet.

### Bezugszeichenliste

- 1: Verdichter
- 2: Brennkammer
- 3: Hochdruckturbine
- 4: Niederdruckturbine
- 5: Wärmetauscher
- 6: Heißgasleitung
- 7: Kaltgasleitung
- 8: Öffnung 9
- 9: Kantenbereich 10
- 10: erste Leitschaufelreihe
- 11: erster Ringraum (heiß)
- 12: zweiter Ringraum (kalt)
- 13: Leitschaufel 3
- 14: Öffnung
- 15: Heißgaskammer 5
- 16: Heißgasringraum 5
- 17: Kaltgaskammer 5
- 18: Kaltgasringraum 5
- 19: Hitzeschild 11
- 20: Hitzeschild 12

## Patentansprüche

1. Turboluftstrahltriebwerk mit zumindest einem Verdichter (1), zumindest einer Brennkammer (2), einer Hochdruckturbine (3) und einer Niederdruckturbine (4), wobei zwischen dem Verdichter (1) und der Brennkammer (2) ein Wärmetauscher (5) angeordnet ist, **dadurch gekennzeichnet, dass** zumindest eine Heißgasleitung (6) von einem Bereich nach der Hochdruckturbine (3) abzweigt und mit dem Wärmetauscher (5) verbunden ist und dass zumindest eine Kaltgasleitung (7) den Wärmetauscher (5) mit einem Bereich vor der Niederdruckturbine (4) verbindet, wobei Heißgas über Öffnungen (8) in den vorderen Kantenbereichen (9) einer ersten Leitschaufelreihe (10) und zugeordnete Leitungen in die Heißgasleitung (6) einleitbar ist und Kaltgase in nach hinten offene Leitschaufeln (13) der Niederdruckturbine (3) einleitbar sind, wobei die Öffnungen (14) der Leitschaufeln (13) als Düsen ausgebildet sind.

2. Turboluftstrahltriebwerk nach Anspruch 1, **dadurch gekennzeichnet, dass** der Wärmetauscher (5) zur Durchführung der gesamten aus dem Verdichter (1) ausströmenden Luftmenge ausgebildet ist.

3. Turboluftstrahltriebwerk nach Anspruch 1 oder 2, **dadurch gekennzeichnet, dass** der Wärmetauscher (5) als Diffusor ausgebildet ist.

4. Turboluftstrahltriebwerk nach einem der Ansprüche 1 bis 3, **dadurch gekennzeichnet, dass** der Wärmetauscher (5) als Gegenstrom-Wärmetauscher ausgebildet ist.

5. Turboluftstrahltriebwerk nach einem der Ansprüche 1 bis 4, **dadurch gekennzeichnet, dass** ein erster Ringraum (11) zur Einleitung der Heißgase vorgesehen ist, mit dem die Heißgasleitung (6) verbunden ist.

6. Turboluftstrahltriebwerk nach einem der Ansprüche 1 bis 5, **dadurch gekennzeichnet, dass** ein zweiter Ringraum (12) zur Einleitung dem Kaltgas vorgesehen ist, mit dem die Kaltgasleitung (7) verbunden ist.

7. Turboluftstrahltriebwerk nach einem der Ansprüche 1 bis 6, **dadurch gekennzeichnet, dass** der Wärmetauscher (5) zumindest eine lokale Heißgaskammer (15) sowie einen mit dieser verbundenen Heißgasringraum (16) und einen Kaltgasringraum (18) sowie zumindest eine lokale Kaltgaskammer (17), die mit dem Kaltgasringraum (18) verbunden ist, umfasst.

## Claims

1. Turbojet engine with at least one compressor (1), at least one combustion chamber (2), a high-pressure turbine (3) and a low-pressure turbine (4), with a heat exchanger (5) being arranged between the compressor (1) and the combustion chamber (2), **characterized in that** at least one hot-gas line (6) branches off from an area downstream of the high-pressure turbine (3) and is connected to the heat exchanger (5), and **in that** at least one cold-gas line (7) connects the heat exchanger (5) with an area upstream of the low-pressure turbine (4), with hot gas being introducible into the hot-gas line (6) via openings (8) in the front edge areas (9) of a first stator vane row (10) and associated lines, and with cold gases being introducible into stator vanes (13) of the low-pressure turbine (3), which open to the rear side, with the openings (14) of the stator vanes (13) being designed as nozzles.

2. Turbojet engine in accordance with Claim 1, **characterized in that** the heat exchanger (5) is designed for being passed by the entire amount of air discharged from the compressor (1).

3. Turbojet engine in accordance with Claim 1 or 2, **characterized in that** the heat exchanger (5) is designed as diffusor.

4. Turbojet engine in accordance with one of the Claims 1 to 3, **characterized in that** the heat exchanger (5) is of the counter-flow type.

5. Turbojet engine in accordance with one of the Claims 1 to 4, **characterized in that** a first annulus (11) is provided for the introduction of the hot gases to which the hot-gas line (6) is connected.

6. Turbojet engine in accordance with of one of the Claims 1 to 5, **characterized in that** a second annulus (12) is provided for the introduction of the cold gases to which the cold-gas line (7) is connected.

7. Turbojet engine in accordance with one of the Claims 1 to 6, **characterized in that** the heat exchanger (5) comprises at least one local hot-gas chamber (15) and a hot-gas annulus (16) which is connected to the local hot-gas chamber (15) as well as a cold-gas annulus (18) and at least one local cold-gas chamber (17) which is connected to the cold-gas annulus (18).

## Revendications

1. Turboréacteur avec au moins un compresseur (1), au moins une chambre de combustion (2), une turbine haute pression (3) et une turbine basse pression (4), sachant qu'un échangeur de chaleur (5) est disposé entre le compresseur (1) et la chambre de combustion (2), **caractérisé en ce qu'**au moins une conduite de gaz chaud (6) part d'une zone en aval de la turbine haute pression (3) et est reliée à l'échangeur de chaleur (5) et qu'au moins une conduite de gaz froid (7) relie l'échangeur de chaleur (5) à une zone en amont de la turbine basse pression (4), sachant que du gaz chaud peut être introduit dans la conduite de gaz chaud (6) par des orifices (8) pratiqués dans les zones avant (9) des bords d'une première rangée d'aubes fixes (10) et par des conduites associées et que des gaz froids peuvent être introduits dans des aubes fixes (13) de la turbine basse pression (4) ouvertes vers l'arrière, les orifices (14) des aubes fixes (13) ayant la forme de buses.

2. Turboréacteur selon la revendication 1, **caractérisé en ce que** l'échangeur de chaleur (5) est formé pour être traversé par la totalité de la quantité d'air issue du compresseur (1).

3. Turboréacteur selon la revendication 1 ou 2, **caractérisé en ce que** l'échangeur de chaleur (5) est formé comme diffuseur.

4. Turboréacteur selon une des revendications 1 à 3, **caractérisé en ce que** l'échangeur de chaleur (5) est conçu de type à contre-courant.

5. Turboréacteur selon une des revendications 1 à 4, **caractérisé en ce qu'**est prévu pour introduire les gaz chauds un premier espace annulaire (11) auquel est reliée la conduite de gaz chaud (6).

6. Turboréacteur selon une des revendications 1 à 5, **caractérisé en ce qu'**est prévu pour introduire les gaz froids un deuxième espace annulaire (12) auquel est reliée la conduite de gaz frois (7).

7. Turboréacteur selon une des revendications 1 à 6, **caractérisé en ce que** l'échangeur de chaleur (5) comprend au moins une chambre à gaz chaud locale (15) ainsi qu'un espace annulaire de gaz chaud (16) relié à cette dernière et un espace annulaire de gaz froid (18), ainsi qu'au moins une chambre à gaz froid locale (17) qui est reliée à l'espace annulaire de gaz froid (18).
